# DEMANDE DE BREVET EUROPEEN

(11) **EP 0 654 452 A1**
(43) Date de publication de la demande: **24.05.1995**
(21) Numéro de dépôt: 93403050.3
(22) Date de dépôt: 16.12.1993
(51) Int. Cl.: C03C 17/34, B67B 5/00

(54) **Procédé de traitement d'un récipient en verre pour l'adhérence d'un polymère**

(30) Priorité: 19.11.1993 FR 9313818
(71) Demandeur: SAINT-GOBAIN EMBALLAGE, F-92400 Courbevoie (FR)
(72) Inventeur: Rieger, Jacques, F-71100 Chalon-sur-Saone (FR)
(74) Mandataire: Muller, René

(57) **Abrégé**

L'invention concerne un procédé de traitement de récipient en verre, destiné au thermoscellage au moyen d'un film comprenant un polymère, comprenant une étape de dépôt d'une couche d'oxyde métallique et une étape de dépôt d'une couche d'un sel soluble de zirconium, sur au moins une partie du récipient.

## Description

Le procédé concerne un traitement d'un récipient en verre permettant de favoriser l'adhérence d'un polymère sur le verre.

Le procédé selon l'invention concerne notamment le traitement du buvant d'objets creux en verre, tels que des pots, bouteilles, gobelets, flacons pour permettre l'adhérence d'un opercule sur le buvant.

Cet opercule est généralement composé d'un film aluminium associé à un film polymère.

Le film polymère est thermofusible et fait office d'adhésif collant l'opercule sur le récipient.

Le problème posé par cette adhérence est qu'elle n'est pas obtenue de façon satisfaisante dans tous les cas.

Différentes solutions permettant d'améliorer cette adhérence ont déjà été décrites dans l'art antérieur.

Le brevet français publié sous le n° 2 519 956 décrit un procédé consistant à déposer sur le buvant un revêtement tel que l'oxyde d'étain sur lequel on redépose un complexe de chrome afin d'assurer une liaison plus forte.

Cette technique apporte des résultats satisfaisants mais nécessite des conditions très délicates quant au dépôt du complexe de chrome, en raison de son instabilité.

En effet, les conditions de travail imposées pour permettre une bonne durabilité du complexe sont très précises en ce qui concerne le pH, la température de la solution de complexe.

La demande de brevet français déposée sous le numéro FR 93 04 329 propose un traitement du verre sans conditions délicates pour sa mise en oeuvre. Elle propose un traitement en deux étapes consistant d'une part en un dépôt d'une couche d'un oxyde métallique et d'autre part, en un dépôt d'une couche d'un sel soluble de chrome tel que le nitrate de chrome. Les résultats de thermoscellage obtenus après ce traitement sont tout à fait satisfaisants.

Cependant, pour certaines applications, l'adhésion obtenue par un tel traitement est trop importante.

D'autre part, d'autres applications qui nécessitent un passage à température très élevée, notamment pour la décoration ne peuvent être revêtues d'une solution à base de chrome qui est proscrit aux très hautes températures.

Le brevet européen EP 158 830 décrit un autre type de traitement de récipients en verre en vue d'un thermoscellage. Ce document décrit un procédé consistant à déposer une composition contenant au moins une résine du type aminoplaste ou acrylique. Les résultats de thermoscellage obtenu selon ce procédé ne sont pas toujours satisfaisants.

L'invention a pour but un procédé de traitement du buvant d'objets creux notamment alimentaires, en verre, permettant le thermoscellage d'un opercule sur le buvant de façon durable, et pouvant être retiré dans des conditions satisfaisantes.

L'invention a également pour but d'adapter la solution à tous types d'opercules couramment utilisés et à différents types de verre tels que les verres de type "sodocalcique", "borosilicate" ou du type "opale".

Les différents inconvénients énoncés précédemment, liés au thermoscellage d'opercules sur des récipients de verre, sont résolus selon l'invention par un procédé de traitement du verre destiné au thermoscellage d'un polymère, consistant en une étape de dépôt d'une couche d'oxyde métallique puis une étape de dépôt d'une couche d'un sel soluble de zirconium.

Selon un mode préféré de l'invention le dépôt du sel soluble de zirconium se fait par enduction.

Ce sel soluble est avantageusement choisi comme étant le nitrate de zirconyle (ZrO (NO₃)₂, 2 H₂O). Ce composé a l'avantage de se décomposer lorsqu'il atteint et dépasse des températures proches de 110°C. Il se forme alors de la zircone ZrO₂ qui renforce l'adhésion de l'opercule. Il est utilisé de préférence en solution aqueuse avec une teneur comprise entre 0,6 % et 1,5 % en poids et de préférence encore égale à 1 % en poids.

Le dépôt de la couche d'oxyde métallique peut se faire par pyrolyse en phase gazeuse (Chemical Vapor Deposition) ou par pulvérisation de solutions des sels métalliques ou par toute autre technique connue de l'homme du métier.

L'oxyde métallique est avantageusement choisi comme appartenant au groupe comprenant l'oxyde d'étain et l'oxyde de titane.

Le procédé ainsi décrit permet d'obtenir une adhérence verre-polymère après thermoscellage satisfaisant et durable pour différents types de polymères usuellement utilisés sur les opercules, et pour différentes natures de verre.

D'autre part, ce type de traitement peut être déposé sur des récipients devant subir un passage ultérieur à haute température, par exemple, pour la réalisation d'une décoration.

L'invention propose également un dispositif et son utilisation pour la mise en oeuvre du procédé.

Il s'agit tout d'abord de moyen pour déposer une couche d'oxyde métallique et de moyen pour déposer une couche de nitrate de zirconyle.

Le moyen pour déposer une couche de nitrate de zirconyle est de préférence un dispositif enducteur tel qu'au moins un rouleau enducteur.

De façon préférée également, le moyen pour déposer une couche d'oxyde métallique est une hotte pour pyrolyse en phase gazeuse, ou pour la pulvérisation de solution de sels métalliques.

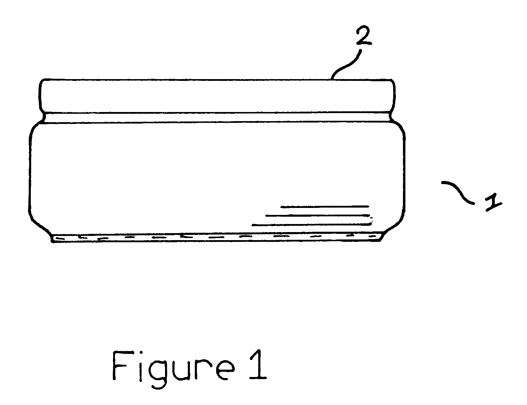

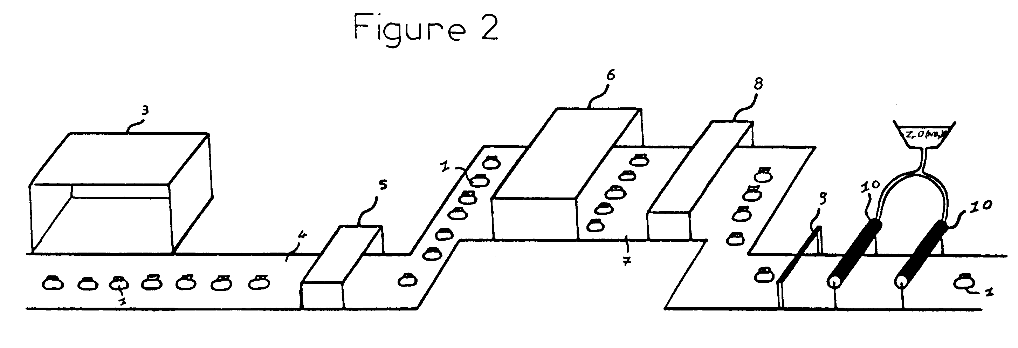

D'autres détails et caractéristiques avantageuses de l'invention ressortent ci-après de la description d'un exemple de dispositif mettant en oeuvre le procédé décrit en référence aux figures 1 et 2 qui représentent :
- figure 1, un exemple de pot à traiter,
- figure 2, un schéma du dispositif selon l'invention.

Sur la figure 1, le buvant 2 du pot 1 est la zone à traiter sur laquelle on vient thermosceller l'opercule. Le buvant d'un objet creux en verre correspond à la zone périphérique de cet objet délimitant son ouverture et plus particulièrement la zone sur laquelle est effectué le thermoscellage.

Le dispositif de la figure 2 décrit en sortie de machine de formage 3, les pots encore chauds convoyés par un tapis 4.

Les pots 1 subissent la première phase du traitement qui est le dépôt d'une couche d'oxyde métallique, tel que l'oxyde d'étain ou l'oxyde de titane.

Ce dépôt peut se faire par exemple par pyrolyse en phase gazeuse de tétrachlorure d'étain. Le dépôt se fait alors sous une hotte 5 où l'on injecte du tétrachlorure d'étain, dans une atmosphère chaude, les pots ayant une température comprise entre 400 et 600°C. Le temps de séjour des pots sous la hotte est de l'ordre de quelques secondes et suffit pour la pyrolyse du tétrachlorure d'étain qui conduit à une couche d'oxyde d'étain. Pour déposer une couche d'oxyde de titane, on utilise du tétrachlorure de titane et l'on effectue le même type d'opérations.

Après le dépôt de la couche d'oxyde métallique, les pots 1 transitent dans une arche de recuisson 6 où ils sont recuits lentement. L'arche de recuisson 6 est par exemple du type à tunnel. La température des pots en sortie de four 6 est comprise entre 70 et 130°C. Le temps de séjour des pots dans l'arche de recuisson 6 est de l'ordre d'une demi-heure à une heure.

Pour permettre ce temps de séjour, les pots ne transitent plus un par un mais en ligne sur un convoyeur 7 plus large. Pour cela, on utilise différents tapis convoyeurs pouvant aller à des vitesses différentes qui permettent de regrouper les pots par un arrangement de ces tapis bien connu pour ce type d'utilisation.

Dans le cas présent, il est usuel qu'à la sortie de l'arche de recuisson 6, les pots subissent un traitement dans une hotte 8 qui apporte un lubrifiant sur le pot. Ce lubrifiant peut être apporté par vaporisation d'acide gras, tel qu'un acide oléique ou par pulvérisation de cires ou d'esters de polyéthylène. Ce traitement permet le frottement des pots les uns sur les autres en diminuant les risques de rayures au cours des manipulations intervenant par la suite lors du remplissage ou de la manutention.

L'accrochage du lubrifiant sur le pot est facilité par la présence de l'oxyde métallique qui a été pyrolysé sur tout le pot.

Par contre, la présence du lubrifiant sur le buvant 2 du pot est néfaste au dépôt d'une couche de nitrate de zirconyle.

Il est donc nécessaire de supprimer le lubrifiant qui a été déposé sur le buvant 2. Pour cela, les pots circulant alors de nouveau un par un grâce à un arrangement de tapis, on utilise tout moyen 9 connu de l'homme du métier, tel qu'un brûleur. Le brûleur est représenté dans une position transversale par rapport au défilement des pots mais il peut également être dans toutes autres positions notamment parallèle à l'axe d'avancement du convoyeur. Il est également possible de disposer plusieurs brûleurs. Ce traitement est très bref de façon à supprimer la couche de lubrifiant et élever la température du buvant, notamment pour éliminer l'eau apportée par le traitement ultérieur.

La deuxième phase du traitement est alors appliquée. Il s'agit du dépôt d'une couche de nitrate de zirconyle. Cette couche est enduite sur le buvant 2 du pot 1. Il est possible par exemple d'utiliser un ou plusieurs rouleaux enducteurs 10. On adjoint ensuite un contrôle d'humidité, par exemple par conductimétrie ou par mesure infra-rouge et un contrôle de température du buvant dont la température doit être entre 100 et 120°C. Ce dernier contrôle se fait par exemple par pyromètre à contact. Ces deux contrôles ne sont pas représentés sur les figures.

Le dispositif met ainsi en oeuvre les deux phases du traitement qui sont le dépôt d'une couche d'oxyde métallique, notamment d'oxyde d'étain, par exemple, par pyrolyse en phase gazeuse et le dépôt d'une couche de nitrate de zirconyle, par exemple par un rouleau enducteur.

Des essais ont été réalisés sur des pots du type pots pour produits laitiers de diamètre 80 millimètres et dont la largeur du buvand est environ 4 millimètres,

Le buvant des pots a subi le traitement suivant :
- dépôt d'une couche d'oxyde de titane, d'une épaisseur moyenne de 40 CTU et au moins supérieure à 25 CTU,
- dépôt d'une couche de nitrate de zirconyle hydraté en solution (1 % en poids), à raison d'un litre de solution pour environ 30 000 pots.

Les pots sont ensuite stockés avant d'effectuer le thermoscellage.

Les conditions de thermoscellage sont les suivantes :
- opercule fabriqué par la Société l'Alsacienne d'aluminium de référence E 128.2,
- température du buvant : 250°C
- pression de thermoscellage : 5 bars
- temps de thermoscellage : 1,5 seconde
Avant le thermoscellage, les pots sont remplis aux 2/3 d'eau.

Des tests de pelage ont été réalisés sur plusieurs séries de pots ayant subi des vieillissements allant de 1 jour à 30 jours après le thermoscellage (jour "J"). Le vieillissement est effectué à température ambiante avec un taux d'humidité relative compris entre 60 et 70 %.

Les tests de pelage sont effectués par barre de traction.

Les résultats sont les suivants et sont exprimés en Newton (N), ce qui correspond à la force (F) nécessaire pour peler l'opercule.

| | J + 1 | J + 6 | J + 12 | J + 18 | J + 24 | J + 30 |
|---|---|---|---|---|---|---|
| F (N) | 9,6 | 7,2 | 7,40 | 7,50 | 7,60 | 6,70 |

Les résultats obtenus sont tout à fait satisfaisants pour les applications considérées.

## Revendications

1. Procédé de traitement de récipient en verre destiné au thermoscellage au moyen d'un film comprenant un polymère, caractérisé en ce qu'il comporte une étape de dépôt d'une couche d'oxyde métallique et une étape de dépôt d'une couche d'un sel soluble de zirconium, sur au moins une partie du récipient.

2. Procédé selon la revendication 1, caractérisé en ce que le dépôt du sel soluble de zirconium se fait par enduction.

3. Procédé selon les revendications 1 ou 2, caractérisé en ce que le sel soluble de zirconium est le nitrate de zirconyle Zr0 (N0₃)₂, 3 H₂O.

4. Procédé selon la revendication 3, caractérisé en ce que le nitrate de zirconyle est utilisé en solution aqueuse avec une teneur comprise entre 0,6 % et 1,5 % et de préférence égale à 1 % en poids.

5. Procédé selon l'une des revendications précédentes, caractérisé en ce que le dépôt de la couche d'oxyde métallique se fait par pyrolyse en phase gazeuse ou par pulvérisation de solutions de sels métalliques.

6. Procédé selon l'une des revendications précédentes, caractérisé en ce que l'oxyde métallique appartient au groupe comprenant l'oxyde d'étain et l'oxyde de titane.

7. Objet creux en verre tel que flacon, pot, traité au moins sur le buvant selon le procédé décrit dans les revendications 1 à 6, prêt à être recouvert, par thermoscellage, d'un opercule comportant au moins un film polymère.

8. Objet creux en verre selon la revendication 7, caractérisé en ce qu'il est soumis après traitement à des températures élevées.
